Europäisches Patentamt

European Patent Office

Office européen des brevets

(11) Publication number: **0 293 992**
**A2**

## EUROPEAN PATENT APPLICATION

(21) Application number: 88201086.1

(51) Int. Cl.⁴: **H04N 11/00**

(22) Date of filing: 31.05.88

(30) Priority: 02.06.87 US 57849

(43) Date of publication of application:
07.12.88 Bulletin 88/49

(84) Designated Contracting States:
DE FR GB

(71) Applicant: **N.V. Philips' Gloeilampenfabrieken**
**Groenewoudseweg 1**
**NL-5621 BA Eindhoven(NL)**

(72) Inventor: **Basile, Carlo**
**c/o INT. OCTROOIBUREAU B.V. Prof.**
**Holstlaan 6**
**NL-5656 AA Eindhoven(NL)**
Inventor: **Cavallerano, Alan Peter**
**c/o INT. OCTROOIBUREAU B.V. Prof.**
**Holstlaan 6**
**NL-5656 AA Eindhoven(NL)**
Inventor: **Tsinberg, Mikhail**
**c/o INT. OCTROOIBUREAU B.V. Prof.**
**Holstlaan 6**
**NL-5656 AA Eindhoven(NL)**

(74) Representative: **van Gils, Cornelis Johannes**
**Maria et al**
**INTERNATIONAAL OCTROOIBUREAU B.V.**
**Prof. Holstlaan 6**
**NL-5656 AA Eindhoven(NL)**

(54) **Decomposition and recombination of a wide-aspect ratio image.**

(57) Each line of a wide aspect ratio television signal is divided into a main panel component (C) and an augmentation panel component ($P_L$ + $P_R$) joined to the main panel component (C) at a stitch point for transmission or storage. At the transmitter a first signal is extracted from the horizontal line signal, the first signal including the main panel component (C), a plurality of main panel redundant pixels extending from the main panel (C) into the augmentation panel component ($P_L$ + $P_R$), and a multiplicity of weighted main panel transition samples extending further into said augmentation panel component ($P_L$ + $P_R$) from the redundant samples. Similarly, a second signal includes the augmentation panel component ($P_L$ + $P_R$), a plurality of augmentation panel redundant samples extending into the main panel (C) and a plurality of transition augmentation samples extending from the redundant augmentation samples further into the main panel (C) and weighted to create a predetermined transition curve. At the receiving end, both signals are gated to delete the transition curves, and the redundant samples are linearly weighted to effect the transition from the main panel component C to the augmentation panel component $P_L$ + $P_R$. When two augmentation panels ($P_L$, $P_R$) are transmitted in a multiplex analog format on the same channel, they are transmitted adjacent to one another and the weighted transition augmentation samples effect a transition from the last redundant pixel of one augmentation panel component ($P_L$) to the first redundant pixel of the second augmentation panel component ($P_R$).

# FIG. 8

1 2 3 4 5 6 7 8 9 10

$\underline{P_L}$

6 7 8 9 10 11 12 13 14 15

$\underline{C}$

| 6 | 7 | 8 | 9 | 10 | |
|------|------|------|------|------|------|
| 100% | 75% | 50% | 25% | 0% | $P_L''$ |
| 0% | 25% | 50% | 75% | 100% | $C''$ |

1a

## Decomposition and recombination of a wide-aspect ratio image

### 1. Field of the Invention

The present invention relates to television transmission and reception and, in particular, high definition television wherein a wide-aspect ratio television signal is generated at the transmitting end and this signal is decomposed into a main panel component adapted to be received on a standard NTSC receiver, and one or more augmentation panel components. For reception as a high definition television signal with a wide-aspect ratio, the two or more panels must be recombined at the receiver.

### BACKGROUND OF THE INVENTION

A number of U.S. patents have been issued describing compatible high definition television systems. However, none of these patents teaches a method or apparatus for generating the main and augmentation panels at the transmitter and recombining this information at the receiver.

Also known is a paper called "Edge Stitching of a Wide-Aspect-Ratio HDTV Image" by J.L. Lo Cicero, M. Pazarci and T.S. Rzeszewski. While this gives mathematical analyses of the problem, no practical implementation is taught.

### SUMMARY OF THE INVENTION

The way in which a wide aspect ratio display is divided into several panels at the transmitter and the way in which the recombination of these panels takes place at the receiver is crucial in determining the quality of the display. Even when the luminance and chrominance signals generating the main panel and augmentation panel displays are properly aligned in gain, time and phase at the receiver, a clearly visible vertical line with dot crawl would be created at each panel-to-panel junction. Such an artifact would render the display unacceptable to a viewer.

It is an object of the present invention to furnish a method and system of decomposing a wide-aspect ratio image into a main panel and at least one augmentation panel for transmission or recording, and recombining the panels at a receiving so that a viewer cannot see any indication of the "stitching" between the panels.

In accordance with the present invention, the plurality of horizontal line signals which together constitute a wide aspect ratio television display are each considered to have a main panel component having a first main panel end and a second main panel end, and at least one augmentation panel component having a first augmentation panel end adjacent the second main panel end, and a second augmentation panel end. At the transmitter, there is extracted from each horizontal line signal a first extracted signal which includes the main panel component, a plurality of main panel redundant samples (pixel values) extending from the second main panel end into the augmentation panel component, and a multiplicity of main panel transition samples which are weighted samples extending from the redundant main panel samples towards the second augmentation panel end and forming a transition from full main panel component value to a second value such as, e.g., zero.

Similarly, a second signal includes the augmentation panel component, redundant augmentation panel samples and transition samples. At the receiver, the augmentation and main panel components are recombined by deleting the transition samples and weighting the redundant samples of the two panels to effect a smooth transition.

Further, the position in the horizontal line at which a stitch point occurs may be varied, thereby decreasing the visibility of the stitch in the final display.

The objects and features of the present invention will be clearly understood upon consideration of the following detailed description, when read in conjunction with the drawings.

### BRIEF DESCRIPTION OF THE DRAWING

Figure 1 illustrates a wide-aspect ratio image at the source, with extracted 4:3 main panel and two augmentation panels;

Figure 2 illustrates a staircase luminance variation at the source and the resulting main and augmentation panels;

Figure 3 is a block diagram of apparatus for main panel/augmentation panel separation and recombination in accordance with the present invention;

Figure 4a illustrates gating signals for decomposing a wide aspect ratio picture into a 4:3 panel and two side panels without overlap;

Figure 4b illustrates gating signals as in Figure 4a, but with X-1 overlapping redundant samples at each stitch point;

Figure 5 is a block diagram for the enabling signals required in the signal extracting apparatus of Figure 6;

Figure 6 is a schematic diagram illustrating the panel extraction apparatus according to the present invention;

Figure 7 illustrates the transmitted and received video envelopes and the gating signals according to the present invention;

Figure 8 illustrates graphically the main panel-augmentation panel stitch with a five sample overlap for linear recombination decoder gating; and

Figure 9 is a block diagram of the receiver apparatus according to the present invention;

Figure 10 is a block diagram illustrating apparatus for varying the stitch point location on a line-by-line basis;

Figure 11a illustrates the line format on an augmentation channel of a two channel system before fading; and

Figure 11b is a block diagram for time multiplexed transmission of two augmentation panel components on one channel.

## DESCRIPTION OF THE PREFERRED EMBODIMENTS

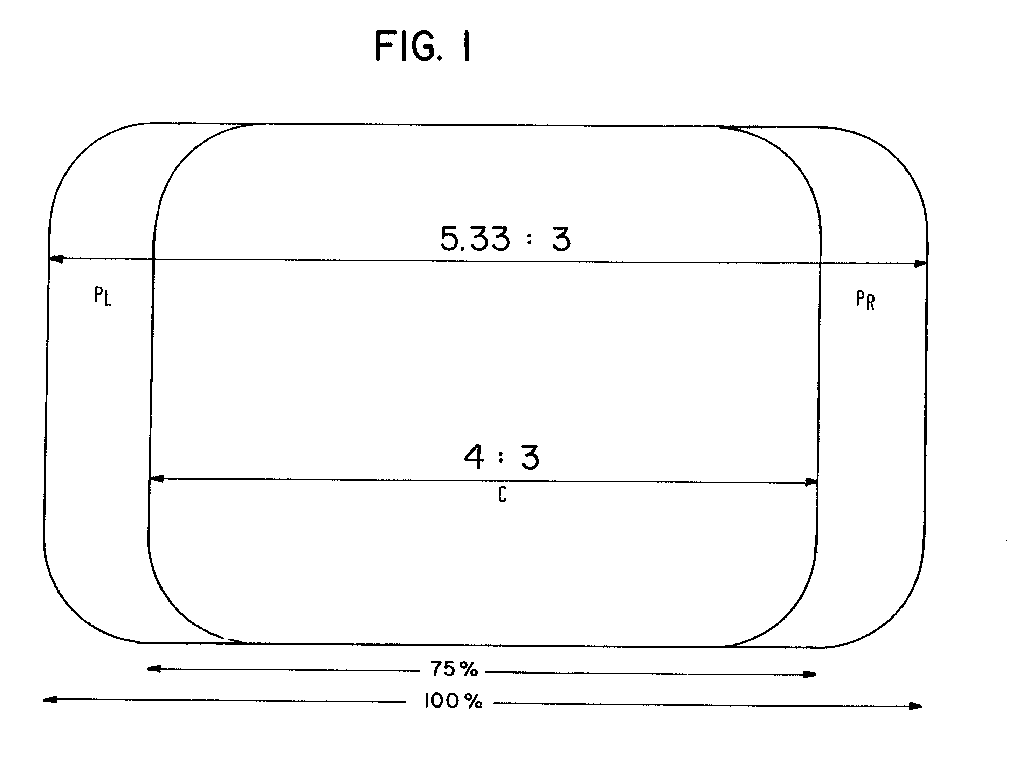

The present invention will be described with respect to the embodiment shown basically in Figure 1. Here, the output of a television camera or a telecine source has an aspect ratio of 5-1/3:3. For purposes of this example, the main panel is a center panel C compatible with, and suitable for, reception on NTSC television receivers currently in service. This main center panel C is flanked on each side by an augmentation panel, a left panel PL and a right panel PR, respectively. It should be noted that the present invention is entirely applicable to any situation wherein a given signal is divided into two or more panels, the panels then having to be recombined to yield a desired output display. The embodiment discussed here, wherein a center panel video signal is flanked by two side panels of equal width, is therefore to be considered illustrative only.

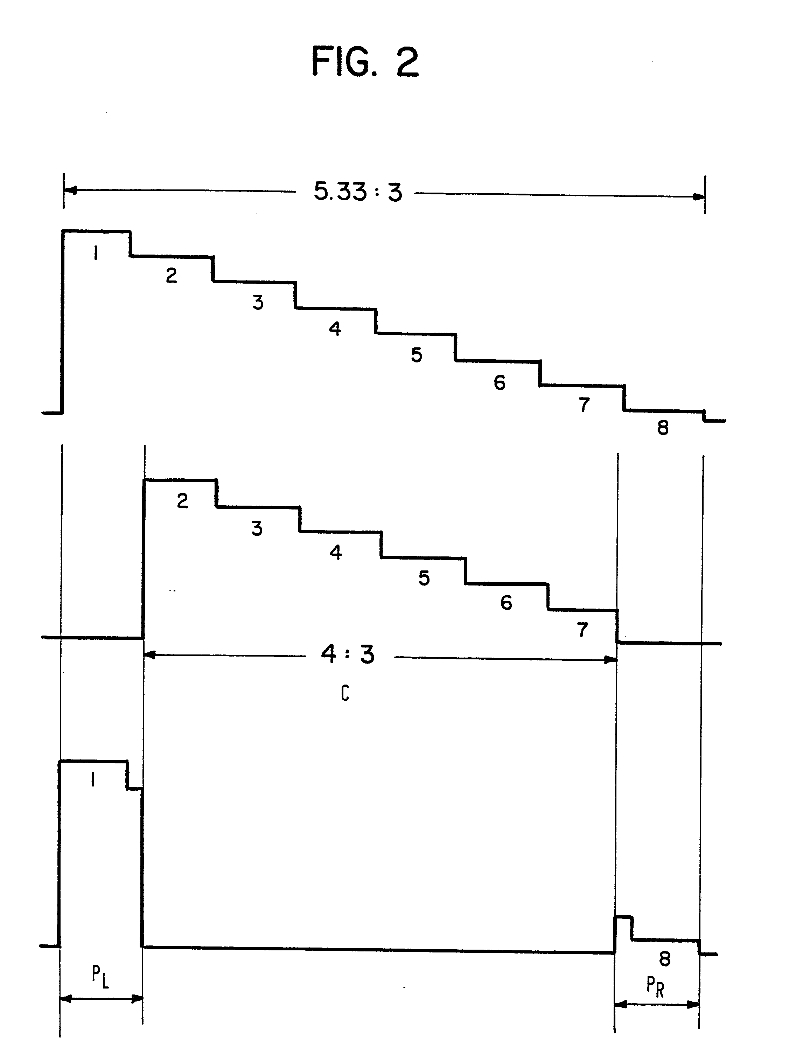

For further purposes of illustration, Figure 2 shows a luma staircase example for one line of the television signal. Figure 2a illustrates the 5-1/3:3 source which is divided into a center panel C including most, but not all, of steps 2 and 7 at its respective extremities, and two side panels including, for the left panel $P_L'$ step 1 and part of step 2 and, for the right panel $P_R'$ part of step 7 and step 8.

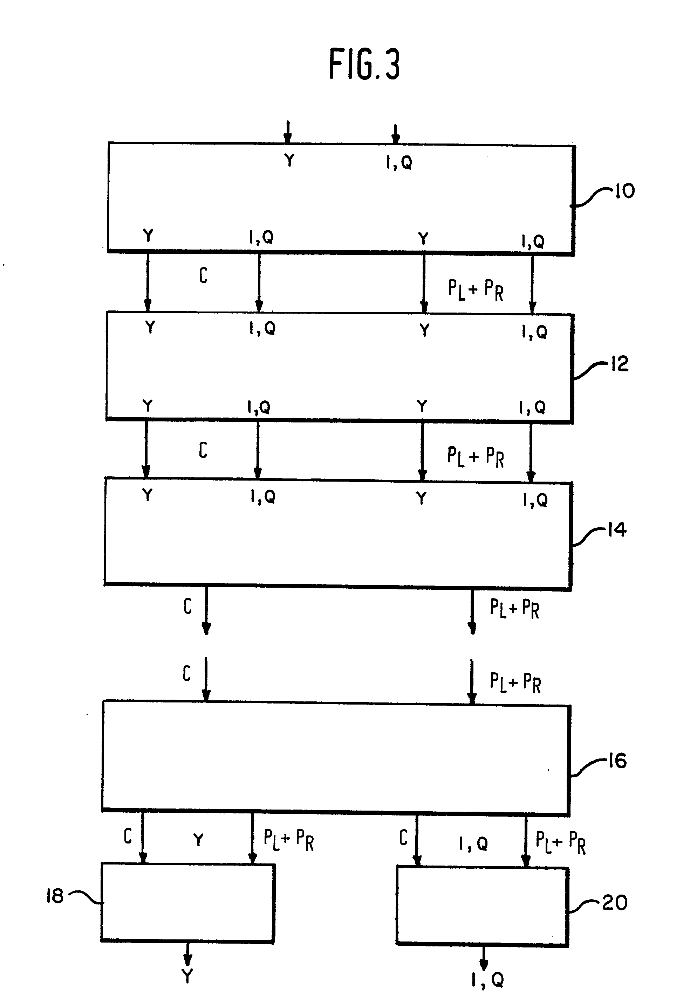

As illustrated in the block diagram of Figure 3, in the present preferred embodiment the wide aspect ratio source is subjected to luma/chroma separation, the luminance signal Y and the chrominance signals I, Q being applied to a center/side panel separator stage 10. At the output of separator stage 10 there are thus two sets of luminance/chrominance signals, namely the luminance signal (Y) and chrominance signals (I, Q) associated with the center panel C, and the luminance and chrominance signals associated with the side panels $P_L$ + $P_R$. The six signal packets are then passed through an edge shaper 12 and processed for transmission in a modulation stage 14 as is well known for NTSC transmission, or transmission in another standard as appropriate.

In a receiver stage 16, the individually received center C and side panel $P_L$ + $P_R$ signals are subjected to NTSC demodulation. The luminance signal is then applied to a luminance center/side panel stitch stage 18, while the chrominance signals are applied to a similar stage 20. The resulting combined luminance and combined chrominance signals are then ready for display on a wide aspect ratio receiver.

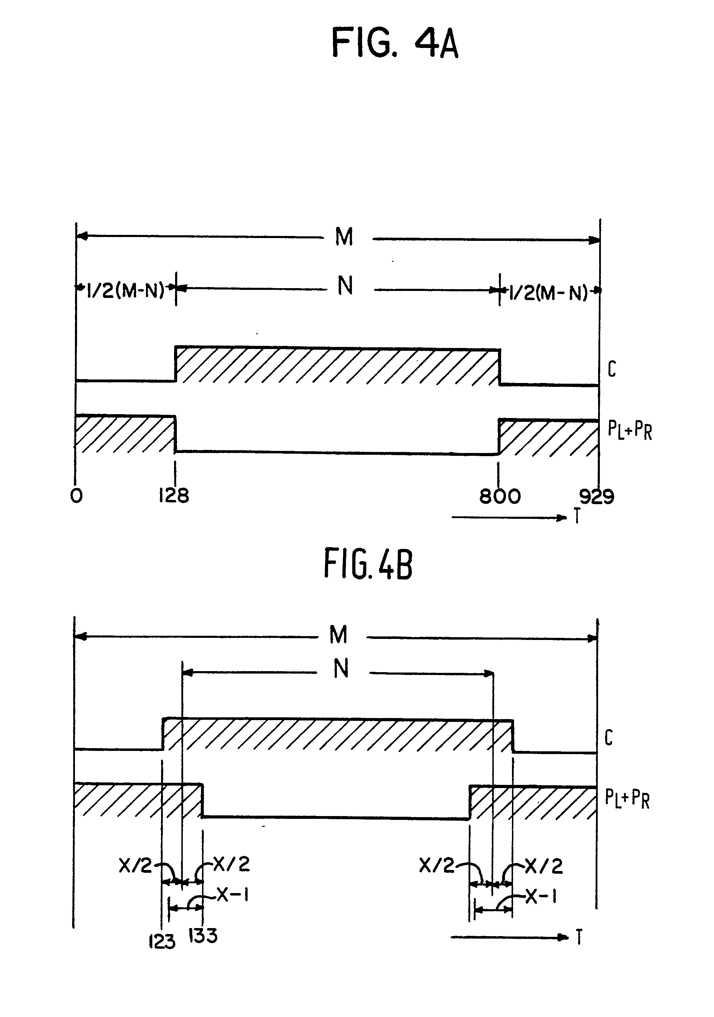

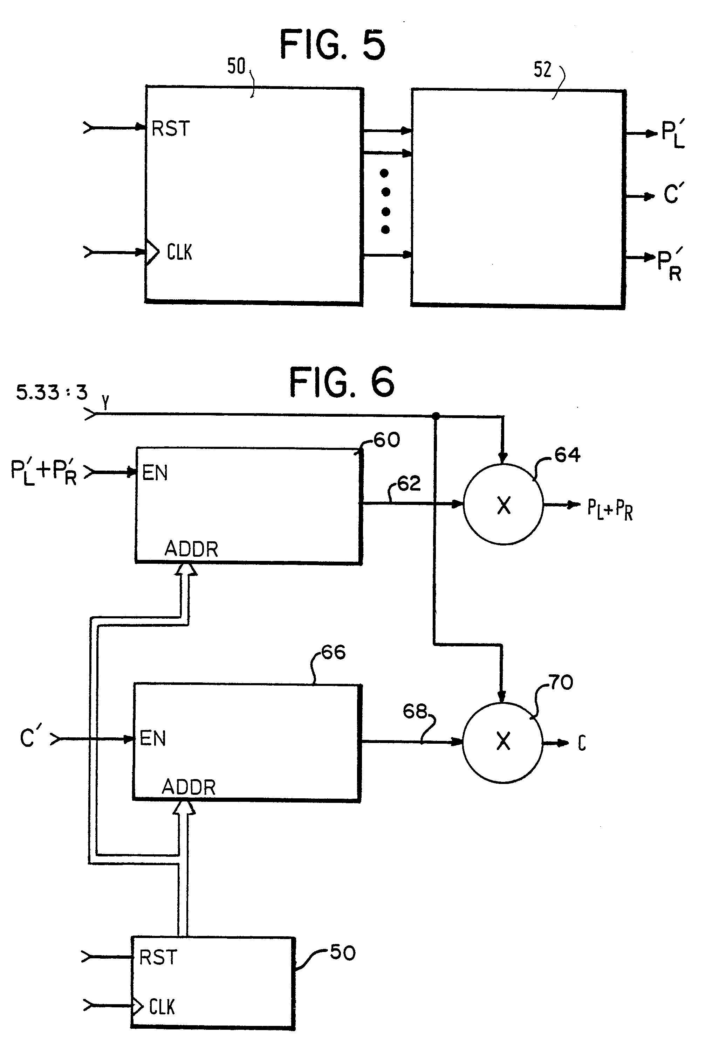

Two ways of timing gating signals for use in separator stage 10, i.e. for decomposing a wide aspect ratio picture into a 4:3 aspect ratio picture and two side panels are illustrated in Figure 4. In both Figure 4a and Figure 4b, the wide aspect ratio width is assumed to include M sampling points (pixels). The horizontal scan time T is the ordinate of both Figure 4a and Figure 4b. In Figure 4a these M pixels are divided into N center panel pixels and, on each side 1/2 x (M-N) side panel pixels. This type of gating results in separation of the panels without overlap. A simple implementation of a suitable gating circuit is illustrated in Figure 5a and will be discussed in connection therewith below. On the other hand, in Figure 4b, the timing of gating signals for accomplishing separation with overlap are illustrated. Here, the M pixels of a line are divided into center panel pixels which include the actual center panel pixels N and X/2 pixels on each side of the N pixels, i.e. a total of X redundant pixel samples. Similarly, the side panel gating signal extends each panel by X/2 redundant side panel pixels into the area of the N center panel pixels. Thus, in each line the separation of the center panel from the two side panels creates X-1 overlapping redundant samples at each of the two separation or "stitch" points.

Figure 5 shows simple implementations of circuits for generating the gating signals illustrated in Figs. 4a and 4b. A counter 50 counts clock pulses from the system clock, which are applied to a clock input CLK and is reset by the horizontal synchronization signals of the video signal, which are applied to a reset input RST. Output signals from counter 50 are applied to inputs of a decoder 52. Decoder 52 furnishes outputs $P_L'$, $C'$, and $P_R'$, respectively. The first output is $P_L'$, that is the left panel enable signal, active from pixel number 1 to pixel number 128. Next, center panel enable signal $C'$ for separating the center panel is activated. Finally after the pixel equal to N + 1/2 (M-N), namely pixel 800, the right panel enable signal $P'_R$ is activated and remains active until the end of the line.

The circuit of Figure 5 can also represent the circuit necessary to implement the signal output illustrated in Figure 4b. The only difference is that the signal $P'_L$, which still starts at pixel 1, continues not to pixel 128, but to pixel 133. At the same time, signal $C'$ starts not at pixel 128 as above, but instead, at pixel 123, so that signals $P'_L$ and $C'$ are active simultaneously over a range of 11 pixels. One of these pixels must be carried by one signal anyway, and is not considered redundant. The same is true at the right-hand side. The signal $P'_R$ starts prior to cessation of the signal $C'$, while the signal $C'$ continues past the former cut-off, for an additional period of 5 pixels. There is thus, both at the right-hand and at the left-hand side, an overlap of X-I = 10 pixels.

Due to bandwidth limitations, a roll-off, that is a more gradual rise and fall for the center panel and for the side panels is required. A cosine curve implemented as illustrated in Figure 6 may be utilized for this purpose. It should be noted that the roll-offs take place outside of the above-described overlap range, i.e. beyond pixel 133, e.g. for pixels 134-138 for the left panel; 118-122 for the left side of the center panel, etc.

Referring now to Figure 6, the signals $P'_L$ and $P'_R$ are applied to the enable input of a programmable read-only memory 60 which is the memory for the panels. This PROM is thus enabled for either $P'_L$ or $P'_R$. During the time that the PROM 60 is enabled, the addresses read-out from counter 50 cause the proper multiplication factors for generating the left panel component $P_L$ including overlap and cosine roll-off to appear on output lines 62 of PROM 60. This multiplication factor is then applied to the incoming luminance signal Y by a multiplier 64. Similarly, the signal C at the output of decoder 52 is applied to enable a PROM 66 which is the PROM storing the relevant addresses for the central panel C. Again, the output of counter 50 addresses PROM 66 and the values read out from the addresses appear on output lines 68. These multiply the sampled value of the luminance signal Y in a multiplier 70, the resultant signals constituting the center panel signals C with appropriate overlap and roll-off (herein also referred to as first extracted signals). While Figure 6 illustrates the shaping of the cosine curve for the luminance signal, the process for the chrominance signals is identical and will therefore not be described herein. It is also possible to use the same method and apparatus for generating center and augmentation panel signals for baseband video, rather than for luminance and chrominance separately.

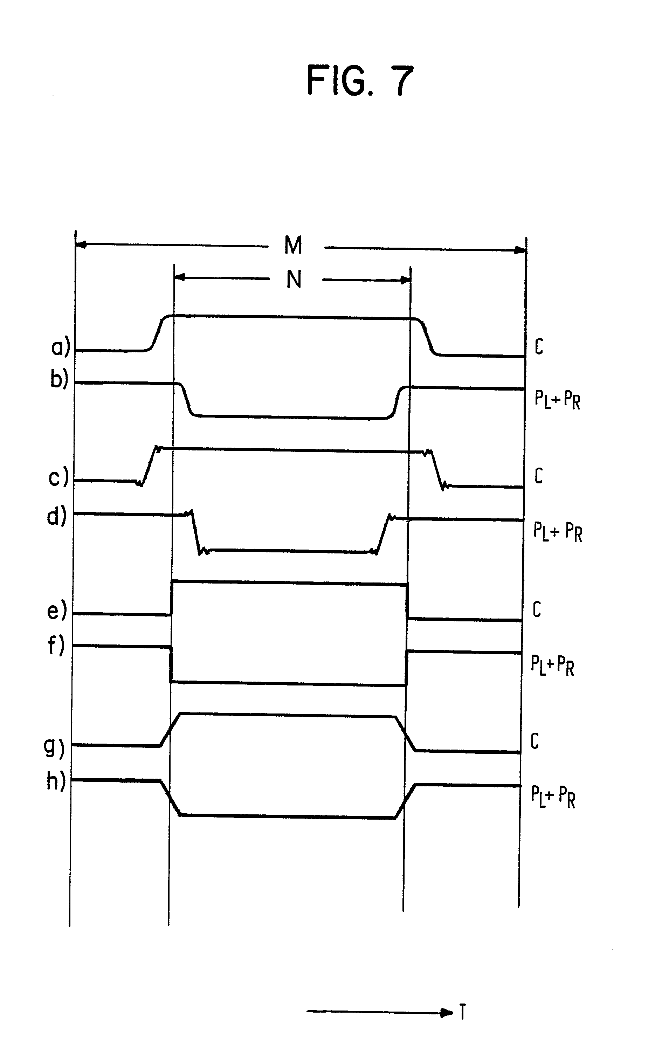

The signals at the outputs of multipliers 64 and 70 are thus the signals denoted as the center C and side panel $P_L$ + $P_R$ signals for the luminance signal Y at the output of edge shaper 12 in Figure 3. These signals, along with the corresponding chrominance signals at corresponding outputs of corresponding stages for the I and Q components, are then transmitted, after suitable modulation in modulator stage 14. The transmitted video envelope is shown in Figure 7a for the center panel C and in Figure 7b for the side panels $P_L$ and $P_R$.

The transmitted signals are received at a demodulator 16. With the exception of the "panel fade" input discussed below, the actual modulation and demodulation are not part of the present invention, are well known, and will therefore not be discussed in detail. It is sufficient to say that the output of demodulator stage 16 consists of three sets of signals, namely the Y signals for the center C and side panels $P_L$ + $P_R$ and the I, Q center C and side panel $P_L$ + $P_R$ signals. The waveshape for, for example, the Y signal is illustrated in Figure 7c for the center panel C and Figure 7d for the side panels $P_L$ + $P_R$. It will be noted that due to transmission and reception, some ringing in the form of oscillations is created at each inflection point, in spite of the cosine roll-off. However, in accordance with the present invention, these oscillations do not form part of the display; i.e. they are gated out at the receiver.

Hard switch decoder gating is shown in Figure 7e for the center panel C and in Figure 7f for the side panels $P_L$ and $P_R$. Linear recombination decoder gating is shown in Figure 7g for the center panel C and in Figure 7h for the side panels $P_L$ and $P_R$.

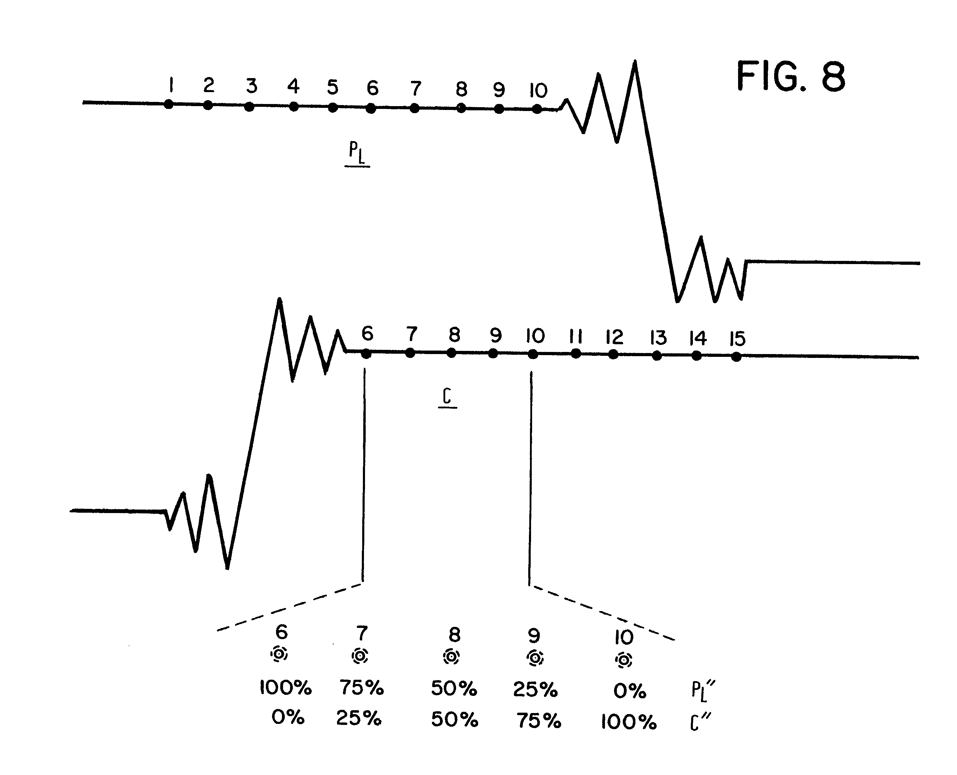

A preferred linear combination gating scheme at the receiver is illustrated in Figure 8.

Specifically, Figure 8 illustrates an example of linear weighting for a left panel-center stitch with five sample overlap. The top line shows the luminance variation in the left panel, $P_L$, while the bottom line indicates the luminance variation for the center panel C. Pixel samples 1, 2, 3, 4 and 5 in the left panel are adjacent to the stitch proper which includes pixel 6, 7, 8, 9 and 10. It will be noted that the transition from left to center panel commences with pixel 6. Therefore the initial ringing of the center signal transition does not affect the final display at all. The linear transition commences at pixels 6, but is still 100% weighted for the left panel $P_L$. Pixels 7 are weighted 75% left panel $P_L$ and 25% center panel C; pixels 8 at 5050, pixels 9, 25% left panel $P_L$ and 75% center panel C, while at pixel 10 the transition is complete, i.e. the panel coefficient $P''_L$ weight becomes 0 while the center coefficient C″ weight 100%.

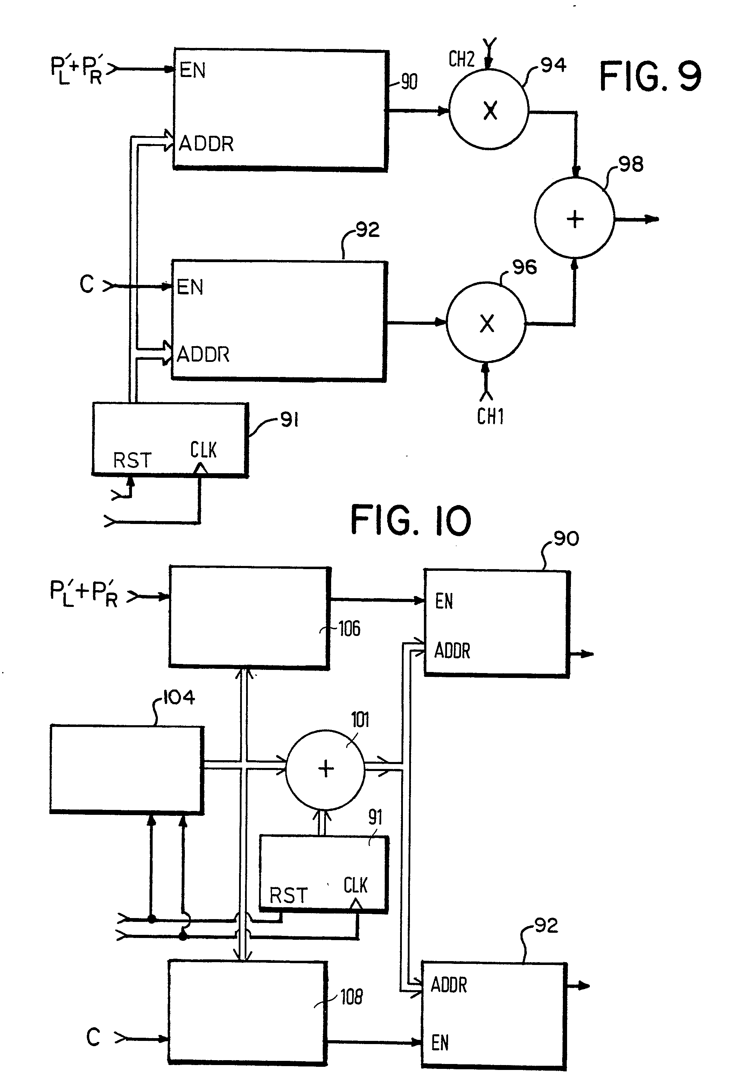

A circuit similar to the circuit of Figure 5 in combination with the circuit of Figure 9 is used to implement the above described weighting. $P'_L$, $P'_R$, $C'$ will be generated as illustrated in Figure 5 and described with reference to the transmitter. Signals $P'_L$ and $P'_R$ are applied to the enable input EN of a PROM 90 which has a plurality of address lines ADDR connected to the output of a counter 91 reset, as was counter 50, by the received horizontal sync signals. (If the right and left panel signals are transmitted on a separate channel from the center panel signals, the video from both channels is applied to a time base corrector. The H sync signal is then available at the time base corrector output.) Similarly, signal $C'$ is applied to the enable input EN of a PROM 92, also having address lines ADDR connected to the output of counter 91. PROMS 90 and 92 hold the weighting factors $P''_L$, $P''_R$ and $C''$ associated with the side panels $P_L$ and $P_R$ and the center panel C, respectively, including the weighting factors associated with the redundant pixels as described above. The outputs of PROMS 90 and 92 are applied, respectively, to first inputs of multipliers 94 and 96 whose second inputs receive the signals received on the second CH1 and first channel CH1, respectively Outputs of multipliers 94 and 96 constitute, respectively, the left $P_L$ and right $P_R$ panel signals with redundant samples suitably weighted for transition with the center panel C signal at each of its ends, and the center signal C with suitably weighted redundant samples at each end. The two signals are applied to respective inputs of an adder 98 at whose output appear signals suitable for display on a wide aspect ratio monitor.

The above description illustrates the decomposition and recombination of the wide aspect ratio signal on a single line, it being assumed that the stitching location will be the same on all lines. The visual effect of the stitch can be decreased even further if the stitch location is varied somewhat from line to line, from frame to frame, or in accordance with any other convenient plan. For a line by line variation, the circuit of Figure 10 may be used. There the address signals generated at the receiver are applied to one input of an adder 101. The second input of adder 101 is connected to the output of a random number generator 104 which is activated by the horizontal synchronization pulses. The outputs of the adder 101, when used to address PROMS 90 and 92 of Figure 9, cause a variation in the start and end of the stitch intervals in a line, within the limits of the numbers within random number generator 104. The range of numbers in random number generator 104 may, for example, be ± 2.

Alternatively, random number generator 104 can be reactivated twice per line, resulting in a slight shift of the left stitch point relative to the right stitch point.

The enabling signals $P'_L$, $P'_R$ and $C'$ must either be delayed under control of the random number generator (delay units 106 and 108) or the range of pixels covered by each expanded to include all possible addresses given the range of random numbers.

It is also possible to omit the enabling signals entirely, if PROMS 90 and 92 store zero as a multiplication factor for all respective inapplicable addresses.

Finally, there is a preferred method for transmitting the left panel signals and the right panel signals on the second channel, if a two channel transmission system with multiplexed analog transmission is used. The most obvious way of arranging the sequence of signals in each line of the second channel CH2 would be as scanned, namely, the horizontal synchronizing signal, followed by the color burst, which is followed by the NTSC modulated left panel signal. The left panel signal is followed by, for example, audio signals, line differential signals for reconstructing the lines not transmitted in the first channel CH1, and, finally, the right panel signal. This arrangement has the disadvantage that, for a pan and scan system, the respective widths of the left panel and of the right panel may change although the total side panel width will remain constant. Such changes would be difficult to carry out with this arrangement and are much simplified by transmitting the left panel signals immediately followed by the right panel signals, followed by the audio and line differential signals. Since changes in the width of the individual panels then do not affect the total panel width, both the audio and line difference signals would be in the same position in each line for any position of the center panel relative to the left and right panels.

Additional advantages are to be gained by the positioning of the right panel signals next to the left panel signals. As explained with reference to Figure 8, the redundancy technique used at the receiver causes the right transition of the left panel and the left transition o: the right panel to be discarded. Instead of rolling off the right part of the left panel signal and the left part of the right signal to zero at the transmitter, a linear fade (interpolation) from the last utilizedsample of the left panel to the first utilized sample of the right panel may be used. This fade will also decrease the chance of ringing noted in Figure 7d. Additionally, the fade may be accomplished in a shorter time than the roll-off in the two directions. The time saved can be utilized for carrying additional signals.

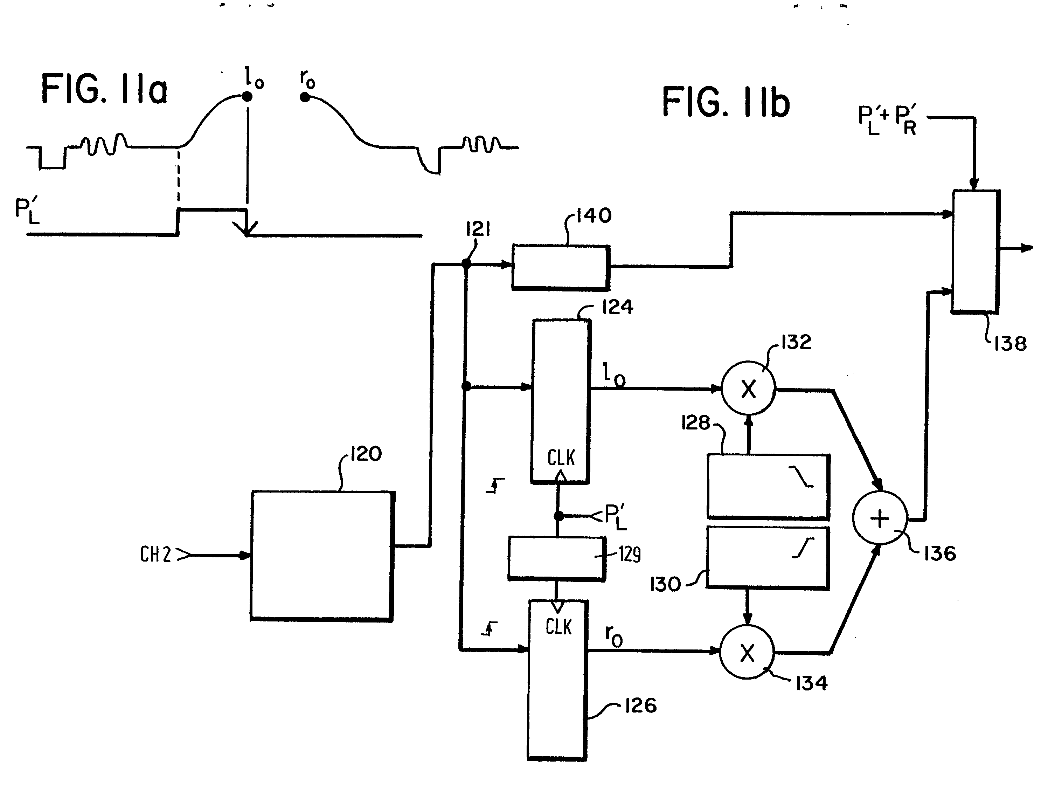

The circuits illustrated in Figure 11 can be used to accomplish this linear fade. The same circuit can be utilized whether the incoming signal is the luminance signal, one of the chrominance signals, or the composite television signal. In Figure 11a it is assumed that the incoming signal is the second channel CH2 (side panel) luminance signal. The components of this signal, as scanned, are applied to a memory 120, for repositioning on the line. Insofar as the present invention is concerned, the output of memory 120 consists of, in each horizontal line, the transition samples at the rising edge of the left hand panel $P_L$, the left hand panel $P_L$ itself, the redundant samples associated with the left hand panel $P_L$, a transition gap of, for example, three samples, the redundant samples associated with the right hand panel $P_R$, the right hand panel $P_R$ as such, and the transition samples at the trailing edge of the right hand panel $P_R$. The additional signals, which will be positioned at predetermined time slots on the remainder of the lines, are not illustrated since they are not relevant to the present invention.

The repositioned signal is applied to the circuit illustrated in Figure 11b. This has an input terminal 121. A latch 124, timed by the trailing edge of $P'_L$, extracts the last valid sample (redundant sample) $l_0$ from the incoming signal. A latch 126 set by the same edge after a delay by al delay circuit 129 corresponding to the number of pixels between $l_0$ and $r_0$ extracts the first valid (redundant) sample $r_0$ from the right panel (see also Figure 11a). A PROM fader, 128, operating in the same manner as the PROM 66 in Figure 6, furnishes multiplying factors. These are applied to the sample at the output of latch 124 by a multiplier 132. Similarly, a PROM fader 130, operating as does PROM 66 in Figure 6, supplies multiplication factors for the left panel sample extracted by latch 126. These multiplication factors are applied to one input of a multiplying unit 134 whose other input is the above-mentioned sample. The weighted signals from multiplier 132 are applied to one input of an adder 136 whose second input receives the weighted samples from multiplier 134. The transition signals from adder 136, representing the fade from $l_0$ to $r_0$, are applied to a multiplexer 138. Multiplexer 138 also receives the remainder of the second channel CH2 signals following a delay circuit 140. The delay circuit 140 provides a delay corresponding to delay 129, plus any additional delay required to equalize processing time. Multiplexer 138 provides the appropriate gating between the two signals at its inputs. The output of the multiplexer 138 is thus the second channel signal CH2 ready for transmission.

At the receiver, the signal received on the second channel CH2 is applied to a memory (not shown). Readout from the memory takes place so that the augmentation and main channels are restored to their original relationship, i.e. the second augmentation panel component is followed by the main panel component which in turn is followed by the first augmentation panel component which in turn is followed by the first augmentation panel component. Any additional signals such as audio signals and line difference signals follow in whatever empty slots may be on the line.

Although the system has been described in reference to a preferred embodiment, it should be noted that, throughout, chrominance signals could be substituted for the luminance signal, and even composite television signals can be used. Further, this system has been shown as embodied in certain hardware. Many variations of such hardware will be evident to one skilled in the art. Further, in many cases software can be substituted for the hardware in an obvious manner. Finally, although the system is discussed with reference to a two channel transmission, the invention is clearly applicable when transmission of the center panel and the side panels is accomplished in one channel.

All of the above embodiments are therefore to be encompassed in the following claims.

**Claims**

1. In a system comprising a receiving station and a transmitting station generating a plurality of horizontal line signals together constituting a wide aspect ratio display, at least one of said horizontal line signals having a main panel component having a first main panel end and a second main panel end, and at least one augmentation panel component having a first augmentation panel end adjacent said second main panel end and a second augmentation panel end, the improvement comprising,

first extraction means for receiving said at least one horizontal line signal and extracting therefrom a first extracted signal comprising said main panel component;

second extraction means for receiving said at least one horizontal line signal and extracting therefrom a second extracted signal comprising said at least one augmentation panel component, at least a selected one of said first extracted signal and said second extracted signal further comprising a plurality of redundant samples extending into the other of said signals; and

means for transmitting said first extracted signal and said second extracted signal towards said receiving station.

2. A system as set forth in claim 1, wherein said first extracted signal comprises a plurality of main panel redundant samples extending from said second main panel end and into said augmentation panel component, and said extracted signal comprises a plurality of first augmentation panel redundant samples extending towards said first main panel end.

3. A system as set forth in claim 2, wherein said first extracted signal further comprises a multiplicity of main panel transition samples extending from said redundant main panel samples toward said second augmentation panel end.

4. A system as set forth in claim 3, wherein said first extraction means further comprises means for weighting each of said main panel transition samples by a respective one of a plurality of predetermined weighting factors, thereby creating weighted main panel transition samples.

5. A system as set forth in claim 4, wherein said weighted main panel transition samples are weighted in accordance with a cosine curve.

6. A system as set forth in claim 1, wherein said wide aspect ratio display is a television display having a width-to height ratio exceeding the width-to-height ratio of a standard television display; and

wherein said main panel component has an aspect ratio equal to said standard aspect ratio.

7. A system as set forth in claim 4, further comprising a plurality of horizontal synchronizing signals for synchronizing said plurality of horizontal line signals, and means for generating clock signals;

wherein said first extraction means further comprises counter means for counting said clock signals following each of said horizontal synchronization signals; and wherein said weighting means comprises means for generating multiplying signals corresponding to the number of so-counted clock signals, and means for multiplying at least said main panel transition samples by said multiplying signals.

8. A system as set forth in claim 7, wherein said multiplying signal generating means comprises a PROM.

9. A system as set forth in claim 4, wherein said second extracted signal further comprises a plurality of first transition augmentation samples extending from said first augmentation panel redundant samples toward said first main panel end;

further comprising means for weighting each of said first transition augmentation samples by a respective one of a plurality of weighting factors, thereby creating weighted augmentation panel transition samples.

10. A system as set forth in claim 1, wherein said horizontal line signals are luminance signals.

11. A system as set forth in claim 2 wherein said at least one augmentation panel component comprises a first and second augmentation panel component having, respectively, a first augmentation panel end adjacent said first and said second main panel ends, respectively; and

wherein said first extracted signal further comprises a plurality of additional main panel redundant samples extending from said first main panel end into said second augmentation panel component; and

wherein said second extracted signal further comprises said second augmentation panel component, and a plurality of second augmentation panel redundant samples corresponding in number to said plurality of first augmentation panel redundant samples.

12. A system as set forth in claim 1, wherein said at least one horizontal line signal comprises said plurality of horizontal line signals.

13. A system as set forth in claim 1, further comprising, at said receiving station, means for receiving said first extracted signal and said second extracted signal; and

processing means for generating said main panel component and said at least one augmentation panel component in response thereto.

14. A transmitting station suitable for a system as claimed in any one of claims 1 to 12.

15. A receiving station suitable for a system as claimed in claim 13.

16. Apparatus for recombining a main panel component having a first main panel end and a second main panel end, with an augmentation panel component having a first augmentation panel end to be joined to said second main panel end and a second augmentation panel end, comprising:

receiving means for receiving a first extracted signal and a second extracted signal, said first extracted signal comprising: said main panel component,

a plurality of main panel redundant samples extending from said second main panel end into said augmentation panel component, and a multiplicity of main panel transition samples, said main panel transition samples comprising a plurality of weighted samples extending from said redundant main panel samples toward said second augmentation panel end,

said second extracted signal comprising:

said augmentation panel component, and a plurality of first augmentation panel redundant samples extending from said first augmentation panel end towards said first main panel end; first gating means connected to receive said first extracted signal for deleting said main panel transition samples therefrom, thereby creating a first combination signal;

second gating means connected to receive said second extracted signal, for gating out said transition augmentation samples, thereby creating a second combination signal; and

combining means connected to said first and second gating means, for combining said first combination signal and second second combination signal, thereby generating said horizontal line signal.

17. Apparatus as set forth in claim 16, wherein said first gating means further comprises first weighting means for weighting said main panel redundant samples by respective first predetermined weighting factors thereby creating weighted main panel redundant samples; and

wherein said first combination signal comprises said weighted main panel redundant samples.

18. Apparatus as set forth in claim 16, wherein said second gating means comprises second weighting means for multiplying said augmentation panel redundant samples by respective second predetermined weighting factors thereby creating weighted augmentation panel redundant samples; and wherein said second combination signal comprises said weighted augmentation panel redundant samples.

19. Apparatus as set forth in claim 18, Wherein said first predetermined weighting factors and said second weighting factors are linear weighting factors effecting a transition from said main panel component to said augmentation panel component.

20. A method for transmitting a plurality of horizontal line signals together constituting a wide aspect ratio display from a transmitting location to a receiving locating over at least one channel having a bandwidth less than the bandwidth required for transmitting said plurality of horizontal line signals, comprising the steps of

at said transmtitting location:

dividing each of said horizontal line signals into a first and second extracted signal, said first extracted signal comprising a main panel component extending over a first predetermined number of time slots, a predetermined reference value extending over a second predetermined number of time slots, and a plurality of transition samples linking said main panel component and said predetermined reference value and extending over transition time slots, said second extracted signal comprising at least one augmentation panel component extending over a third predetermined number of time slots comprising said main panel transition time slots, and a fourth predetermined number of reference value time slots;

transmitting said first and second extracted signals to said receiving location; and

at said receiving location:

gating out said main panel transition samples, thereby creating first combination signals;

and adding said first combination signals to said second extracted signals, thereby creating said horizontal line signals.

21. A method as set forth in claim 20, wherein each of said first extracted signals further comprises a plurality of redundant main panel samples interposed in redundant sample time slots between said main panel component and said main panel transition samples;

wherein said third predetermined number of slots further comprises said redundant sample time slots; further comprising the step of weighting said main panel redundant samples and augmentation panel component samples in corresponding time slots to create a transition between said main panel component and said augmentation panel component prior to combining said first and second combination signals.

# FIG. I

EP 0 293 992 A2

1-IX-PHA 21379

5.33 : 3

P_L          P_R

4 : 3

C

75 %

100 %

# FIG. 2

5.33 : 3

4 : 3

C

$P_L$

$P_R$

# FIG.3

# FIG. 4A

# FIG. 4B

# FIG. 5

# FIG. 6

# FIG. 7

FIG. 8

PL

1  2  3  4  5  6  7  8  9  10

C

6  7  8  9  10  11  12  13  14  15

|  | 6 | 7 | 8 | 9 | 10 |  |
|---|---|---|---|---|---|---|
|  | 100% | 75% | 50% | 25% | 0% | PL″ |
|  | 0% | 25% | 50% | 75% | 100% | C″ |

EP 0 293 992 A2

# FIG. 9

# FIG. 10

FIG. IIa

FIG. IIb

$P_L' + P_R'$

EP 0 293 992 A2

9 - IX - PHA 21379